(19) **Europäisches Patentamt / European Patent Office / Office européen des brevets**

(11) **EP 2 643 135 B1**

(12) ## EUROPÄISCHE PATENTSCHRIFT

(45) Veröffentlichungstag und Bekanntmachung des Hinweises auf die Patenterteilung:
**27.12.2017 Patentblatt 2017/52**

(21) Anmeldenummer: **11787883.5**

(22) Anmeldetag: **24.11.2011**

(51) Int Cl.:
**B29C 45/16** (2006.01)  **B29D 11/00** (2006.01)

(86) Internationale Anmeldenummer:
**PCT/EP2011/070947**

(87) Internationale Veröffentlichungsnummer:
**WO 2012/069590 (31.05.2012 Gazette 2012/22)**

(54) **VERFAHREN ZUR HERSTELLUNG VON OPTISCHEN FORMKÖRPERN**

METHOD FOR PRODUCING MOLDED OPTICAL PARTS

PROCÉDÉ DE FABRICATION DE CORPS DE FORME OPTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2010 EP 10192422**

(43) Veröffentlichungstag der Anmeldung:
**02.10.2013 Patentblatt 2013/40**

(73) Patentinhaber: **Covestro Deutschland AG**
**51373 Leverkusen (DE)**

(72) Erfinder:
• **ZÖLLNER, Olaf**
**51375 Leverkusen (DE)**

• **KLINKENBERG, Christoph**
**50679 Köln (DE)**
• **HERMANSEN, Christoph**
**14715 Kotzen (DE)**
• **BOTZEN, Manfred**
**47829 Krefeld (DE)**

(74) Vertreter: **Levpat**
**c/o Covestro AG**
**Gebäude 4825**
**51365 Leverkusen (DE)**

(56) Entgegenhaltungen:
**FR-A1- 2 861 640      US-A- 5 313 545**
**US-A1- 2005 168 690   US-A1- 2010 109 034**

**Beschreibung**

Die Erfindung betrifft ein Verfahren zur Herstellung von optischen Formkörpern, insbesondere von optischen Linsen, wobei ein Vorformling in einem Formwerkzeug durch Spritzgießen eines ersten thermoplastischen Kunststoffs erzeugt wird und mindestens eine Deckschicht auf dem Vorformling durch Spritzgießen eines zweiten thermoplastischen Kunststoffs erzeugt wird.

Formkörper von optischer Qualität sind für eine Vielzahl von Anwendungen relevant. So werden optische Linsen unter anderem zur Lichtlenkung in Beleuchtungssystemen eingesetzt. Hierzu zählen neben Automobilscheinwerfern auch Beleuchtungsvorrichtungen im Haushaltsbereich sowie im öffentlichen Raum, wie beispielsweise Straßenbeleuchtungen. Als Lichtquellen werden vermehrt lichtemittierende Dioden (LEDs) eingesetzt, welche UV- und IR-arm sind.

Des Weiteren besteht auch für Sehhilfen, wie Brillen oder Kontaktlinsen, sowie für optische Geräte, wie Mikroskope, Ferngläser oder Teleskope, ein Bedarf an Linsen von guter optischer Qualität.

Beispielhafte optische Formkörper sind bereits aus dem Stand der Technik bekannt. So offenbart die DE 102008034153 A1 ein Verfahren zur Herstellung eines optischen Formkörpers aus einem Kunststoffmaterial, wobei die Herstellung des optischen Formkörpers wenigstens drei aufeinanderfolgende Einspritzvorgänge umfasst.

Die DE 69725535 T2 offenbart ein Verfahren zur Herstellung von Kunststoffprodukten für optische Zwecke, wobei zunächst ein primäres Formteil aus einem Harz erzeugt wird, auf das wiederum eine Schicht aus demselben Harz unter Bildung eines sekundären Formteils aufgebracht wird. Hierbei wird das Harz, das für das Bedecken des primären Formteils gedacht ist, auf eine Temperatur zwischen der empfohlenen niedrigsten Temperatur des Einspritzens plus 5°C und der empfohlenen höchsten Temperatur minus 5°C erwärmt und auf das primäre Formteil gespritzt, so dass innerhalb des Temperaturbereiches das primäre und das sekundäre Formteil durch Schmelzen miteinander ohne eine nachfolgende Schrumpfung verschweißt werden.

In der DD 298620 A5 wird ein zweistufiges Spritzgießverfahren für Kunststoffformteile mit Hilfe eines Spritzgießwerkzeugs beschrieben, dessen formteilbegrenzenden Flächen parallel verschiebbar sind.

Die JP 2001-191365 A beschreibt ein Verfahren zum Spritzgießen dickwandiger Linsen mit einem sukzessiven Aufbau der Linse in mehreren Schichten. Die so hergestellten Linsen können mit reduzierter Zykluszeit hergestellt werden und zeigen eine reduzierte Schwindung.

Ferner ist bereits in der Literatur beschrieben worden, dass beim Spritzgießen am Formwerkzeug eine hohe Temperatur in der Einspritzphase sowie eine niedrige Temperatur in der Abkühlphase eingestellt werden sollte. Das entsprechende Temperierverfahren wird auch als variotherme Temperierung bezeichnet und ist unter anderem in der US 2004/0188886 A1 offenbart worden.

Die DE 69411728 T2 beschreibt ein Verfahren zur Herstellung geschichteter photochromer Brillenlinsen, in dem die verwendeten Werkzeugformen vor dem Einspritzen des thermoplastischen Kunststoffs auf eine Temperatur erwärmt werden, die etwas oberhalb der Glasübergangstemperatur des Thermoplasten liegt.

In der DE 20022726 U1 wird ein Werkzeug einer Spritzprägemaschine zur Herstellung von implantierbaren Linsen aus Kunststoff offenbart, mit dem sich Formteile herstellen lassen, die auch ohne eine mechanische Nachbearbeitung sehr geringe Formabweichungen und eine sehr hohe Oberflächengüte bei gleichzeitiger Spannungsfreiheit aufweisen. Es wird daraufhingewiesen, dass die Formkavität beim Einspritzen des Kunststoffs auf hinreichend hoher Temperatur gehalten werden muss, um gute optische Qualitäten erreichen zu können.

Die US 20090283926 A1 beschreibt ein Verfahren zum Auflaminieren eines funktionalen Films auf eine spritzgegossene thermoplastische Linse in einer Spritzgussmaschine. Bei Verwendung von Polycarbonat als Thermoplast für den Linsenkörper wird der Thermoplast bei einer Schmelzetemperatur zwischen 260 °C und 315,6 °C sowie einer Werkzeugtemperatur zwischen 93,3 °C und 146,1 °C eingespritzt.

Die US 7615176 beansprucht ein Verfahren zur Verbesserung der Haftung innerhalb von Mehrschichtverbunden unter Verwendung von zwei Formkavitäten, wobei die erste Formkavität auf einer höheren Temperatur gehalten wird, als die zweite Formkavität.

Im Stand der Technik wird in der Regel eine optimale Werkzeugtemperatur zur Erzeugung der verschiedenen Schichten aus einem Thermoplast eingestellt. Hierbei herrscht im Stand der Technik die Auffassung, dass nur bei einer im Wesentlichen optimalen Werkzeugtemperatur für jede Schicht ein optischer Formkörper mit einer guten Qualität erzeugt werden kann. Die optimale Temperatur des Formwerkzeugs hängt vom eingesetzten Kunststoffmaterial und insbesondere der Glasübergangstemperatur des Kunststoffmaterials ab. Bei Polycarbonat liegt die optimale Temperatur für dickwandige optische Bauteile beispielsweise bei ca. 120°C (ca. 20°C bis 30°C unterhalb der Glasübergangstemperatur von Polycarbonat).

Die optimale Werkzeugtemperatur von 120° bringt jedoch Nachteile mit sich. So ergeben sich aufgrund der hohen Werkzeugtemperaturen auch bei einem variothermen Verfahren lange Abkühlzeiten von bis zu 20 min pro Formkörper.

Daher liegt der vorliegenden Erfindung die Aufgabe zugrunde, ein Verfahren zur Herstellung eines optischen Formkörpers zur Verfügung zu stellen, welches zu optischen Formkörpern mit ausgezeichneter optischer Qualität mit insbesondere verbesserten optischen Abbildungseigenschaften und geringen inneren Spannungen führt.

Die zuvor hergeleitete und aufgezeigte Aufgabe wird gemäß einem ersten Aspekt der Erfindung bei einem Verfahren zur Herstellung eines optischen Formkörpers gemäß dem Patentanspruch 1 gelöst. Das Verfahren zur Herstellung eines optischen Formkörpers umfasst:

- Erzeugen eines Vorformlings in einem Formwerkzeug durch Spritzgießen eines ersten transparenten thermoplastischen Kunststoffs, und zwar eines Polycarbonats,
- Erzeugen von mindestens einer Deckschicht auf dem Vorformling durch Spritzgießen eines zweiten transparenten thermoplastischen Kunststoffs, und zwar eines Polycarbonats,
- wobei die Temperatur des Formwerkzeugs zum Erzeugen des Vorformlings um 30% bis 60%, bezogen auf die Temperatur in °C, niedriger als die Temperatur des Formwerkzeugs zum Erzeugen der mindestens einen Deckschicht ist, wobei die Temperatur des Formwerkzeugs zum Erzeugen des Vorformlings zwischen 60°C und 80°C liegt und die Temperatur des Formwerkzeugs zum Erzeugen der mindestens einen Deckschicht zwischen 90°C und 130°C liegt und wobei in dem Formwerkzeug während der Erzeugung des Vorformlings ein Druck zwischen 250 und 500 bar erzeugt wird.

Im Gegensatz zum Stand der Technik wird gemäß der Lehre der Erfindung die innere Spannung eines optischen Formkörpers aus einem transparenten Thermoplast dadurch reduziert, dass der Vorformling nicht mit einer nahezu optimalen Werkzeugtemperatur, sondern mit einer deutlich niedrigeren Werkzeugtemperatur erzeugt wird. Darüber hinaus kann durch die signifikant niedrigere Werkzeugtemperatur die Herstellungszeit von optischen Formkörpern aufgrund der geringeren Kühlzeit signifikant reduziert werden.

In einem ersten Schritt wird ein Vorformling bzw. eine erste Schicht aus einem transparenten Thermoplast, und zwar aus Polycarbonat, erzeugt. Im Gegensatz zum Stand der Technik wird dieser jedoch nicht bei der optimalen Werkzeugtemperatur, sondern bei einer deutlich geringeren Temperatur erzeugt. Die Werkzeugtemperatur, also die Werkzeugwandtemperatur, wird zwischen 30 % bis 60 % niedriger als eine (nahezu) optimale Werkzeugtemperatur, bei der die mindestens eine Deckschicht erzeugt wird, eingestellt.

Es ist erfindungsgemäß erkannt worden, dass es für ein qualitativ hochwertiges optisches Bauteil überraschender Weise ausreichend ist, die mindestens eine Deckschicht mit einer nahezu (optimalen) Werkzeugtemperatur zu erzeugen, während ein Vorformling mit einer deutlich geringeren Werkzeugtemperatur erzeugt werden kann.

Beispielsweise können zwei Deckschichten beispielsweise zeitlich nacheinander auf gegenüberliegende Oberflächen des Vorformlings aufgespritzt werden. Auch ist es möglich, auf die erste Deckschicht anschließend eine zweite oder eine dritte Deckschicht aufzuspritzen. Gemäß einer ersten bevorzugten Ausführungsform des erfindungsgemäßen Verfahrens kann auf dem Vorformling eine obere Deckschicht und eine untere Deckschicht durch simultanes Spritzgießen der Deckschichten aufgebracht werden. Simultanes Spritzgießen bedeutet insbesondere, dass die beiden Deckschichten zeitgleich und in gleicher Weise erzeugt werden können. Es hat sich gezeigt, dass durch simultanes Spritzgießen einer oberen Deckschicht und einer unteren Deckschicht die inneren Spannungen verringert werden können. Zeitgleich können beide Oberflächen des Vorformlings mit der Spritzgießmasse versehen werden. Bessere optische Eigenschaften und insbesondere eine gute Oberflächenabformung können erzielt werden.

Gemäß einer weiteren Ausführungsform kann der erste Kunststoff aus dem gleichen Material wie der zweite Kunststoff gebildet sein. Hierdurch kann ein optisches Bauteil in einfacher Weise hergestellt werden. Es kann auf ein komplexes Werkzeug, welches Spritzgießen mit mindestens zwei unterschiedlichen Kunststoffen erlaubt, verzichtet werden. In einfacher Weise und mit einer besonders kurzen Abkühlzeit können optische Formkörper gebildet werden.

Alternativ kann der erste Kunststoff aus einem anderen Material, einem anderen Polycarbonat, als der zweite Kunststoff gebildet sein. Durch die Verwendung unterschiedlicher Kunststoffarten können die Vorteile zweier verschiedener Kunststoffmaterialien gemeinsam genutzt werden. Beispielsweise kann bei optischen Bauelementen, welche in der Außenbeleuchtung eingesetzt werden sollen, für die mindestens eine Deckschicht ein Kunststoffmaterial eingesetzt werden, welches gegenüber Umwelteinflüssen resistenter ist als das Kunststoffmaterial für den Vorformling und/oder einer weiteren Deckschicht. Auch ist es denkbar, die unterschiedlichen Brechungsindizes von verschiedenen Kunststoffarten zu nutzen. Beispielsweise kann ein optischer Formkörper mit einer Deckschicht aus einem Kunststoff, welches einen ersten Brechungsindex aufweist, der sich von dem Brechungsindex des Kunststoffes des Vorformlings unterscheidet, derart ausgewählt, dass eine bestimmte Lichtlenkung erzielt wird. Ein optischer Formkörper mit speziellen Funktionen und/oder Eigenschaften kann geschaffen werden.

Der Kunststoff des Vorformlings oder der einen Deckschicht ist ein transparenter thermoplastischer Kunststoff, und zwar Polycarbonat.

Beispielhafte thermoplastische Kunststoffe, die daneben zur Herstellung der optischen Formkörper verwendet werden können, sind neben Polycarbonat (wie Makrolon®) Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), Polyamid, cyclisches Polyolefin, Poly- oder Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona), Polymethylmethacrylat oder Mischungen der genannten Komponenten. Weitere Materialien, welche eingesetzt werden können, sind sogenannte Liquid Silicone Rubber (LSR) beispielsweise von der Firma Momentive.

Auch Mischungen von mehreren thermoplastischen Polymeren, insbesondere wenn sie transparent miteinander mischbar sind, sind möglich, wobei in einer speziellen Ausführungsform eine Mischung aus Polycarbonat mit PMMA (weiter bevorzugt mit PMMA < 2 Gew.%) oder Polyester bevorzugt ist.

Eine weitere spezielle Ausführungsform kann in diesem Zusammenhang eine Mischung aus Polycarbonat und PMMA mit weniger als 2,0 Gew.%, vorzugsweise weniger als 1,0 Gew.%, weiter bevorzugt weniger als 0,5 Gew.% enthalten, wobei mindestens 0,01 Gew.% PMMA enthalten sind bezogen auf die Menge Polycarbonat, wobei das PMMA bevorzugt ein Molgewicht <40.000 g/mol aufweist. In einer besonders bevorzugten Ausführungsform beträgt der Anteil an PMMA 0,2 Gew.%, und besonders bevorzugt 0,1 Gew.%, bezogen auf die Menge Polycarbonat, wobei das PMMA bevorzugt ein Molgewicht <40.000 g/mol aufweist.

Eine alternative weitere spezielle Ausführungsform kann eine Mischung aus PMMA und Polycarbonat mit weniger als 2 Gew.%, vorzugsweise weniger als 1 Gew.%, weiter bevorzugt weniger als 0,5 Gew.% enthalten, wobei mindestens 0,01 Gew.% Polycarbonat bezogen auf die Menge PMMA enthalten sind.

In einer besonders bevorzugten Ausführungsform kann der Anteil an Polycarbonat 0,2 Gew.%, und besonders bevorzugt 0,1 Gew.%, bezogen auf die Menge PMMA betragen.

Geeignete Polycarbonate für die Herstellung der erfindungsgemäßen Kunststoffzusammensetzung sind alle bekannten Polycarbonate. Dies sind Homopolycarbonate, Copolycarbonate und thermoplastische Polyestercarbonate.

Die Herstellung der Polycarbonate erfolgt vorzugsweise nach dem Phasengrenzflächenverfahren oder dem Schmelze-Umesterungsverfahren.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate werden bevorzugt durch Reaktionen von Bisphenolverbindungen mit Kohlensäureverbindungen, insbesondere Phosgen oder beim Schmelzeumesterungsprozess Diphenylcarbonat bzw. Dimethylcarbonat, dargestellt.

Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt.

Diese und weitere Bisphenol- bzw. Diolverbindungen, die sich für die Polycarbonatsynthese einsetzen lassen, sind unter anderem offenbart in WO 2008037364 A1 (s.7, Z. 21 bis s. 10, Z. 5), EP 1 582 549 A1 ([0018] bis [0034]), WO 2002026862 A1 (S. 2, Z. 20 bis S. 5, Z. 14), WO 2005113639 A1 (S. 2, Z.1 bis S. 7, Z. 20).

Die Polycarbonate können linear oder verzweigt sein. Es könne auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009 und DE 25 00 092 A1 (erfindungsgemäße 3,3-bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US-B 5 367 044 sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Polycarbonate können darüber hinaus Polymeradditive, wie z.B. Fließverbesserer, Thermostabilisatoren, Entformungsmittel oder Verarbeitungshilfsmittel enthalten.

Ferner können UV-Absorber oder IR-Absorber enthalten sein. Geeignete UV-Absorber sind beispielsweise beschrieben in der EP 1 308 084 A1, in der DE 102007011069 A1 sowie in der DE 10311063 A1. Geeignete IR-Absorber sind beispielsweise in EP 1 559 743 A1, EP 1 865 027 A1, DE 10022037 A1, DE 10006208 A1 sowie in den italienischen Patentanmeldungen RM2010A000225, RM2010A000227 sowie RM2010A000228 offenbart.

Von den IR-Absorbern sind solche auf Borid- und Wolframatbasis sowie auf ITO und ATO basierende Absorber sowie Kombinationen daraus bevorzugt.

In einer besonders bevorzugten Ausführungsform der vorliegenden Erfindung kann der thermoplastische Kunststoff ein Polycarbonat mit einem Molekulargewicht Mw von 20.000 bis 32.000, weiter bevorzugt von 22.000 bis 27.000, ermittelt durch Gelpermeationschromatographie mit Polycarbonateichung sein.

Bei den erfindungsgemäßen optischen Formkörpern können die jeweiligen Schichten alle aus einem thermoplastischen Kunststoff bestehen. Alternativ können die Schichten auch aus verschiedenen thermoplastischen Kunststoffen aufgebaut sein. Die Verwendung eines thermoplastischen Kunststoffs für alle Schichten des optischen Formkörpers ist im Rahmen der vorliegenden Erfindung jedoch bevorzugt.

Gemäß einer bevorzugten Ausführungsform des erfindungsgemäßen Verfahrens liegt die Temperatur des Formwerkzeugs zum Erzeugen des Vorformlings zwischen 60°C und 80°C, besonders bevorzugt bei ca. 70°. Insbesondere bei Polycarbonat werden bei herkömmlichen Spritzgießverfahren höhere Werkzeugtemperaturen im (optimalen) Bereich von ca. 120°C (ca. 20°C bis 30°C unterhalb der Glasübergangstemperatur von Polycarbonat) eingestellt. Niedrigere Formwerkzeugtemperaturen haben gegenüber der herkömmlichen Formwerkzeugtemperatur den Vorteil, dass die Kühlzeit des optischen Formkörpers verringert werden kann. Die Herstellungszeit kann reduziert und damit der Produktionsdurchsatz verbessert werden. Gleichzeitig können qualitativ hochwertige optische Linsen hergestellt werden. Grund hierfür ist, dass die Werkzeugtemperatur beim Erzeugen des Nachspritzlings höher und insbesondere im Bereich der optimalen Werkzeugtemperatur ist. Die Temperatur des Formwerkzeugs zum Erzeugen der mindestens einen Deckschicht liegt zwischen 90°C und 130°C, bevorzugt bei ca. 120°C. Insbesondere bei einer Formwerkzeugtemperatur von 120°C kann eine hohe Bauteilgüte aufgrund dieser Werkzeugwandtemperatur gewährleistet werden.

Besonders gute Ergebnisse können erzielt werden, wenn die Werkzeugtemperatur bei der Erzeugung des Vorformlings aus Polycarbonat bei im Wesentlichen 70°C liegt und die Werkzeugtemperatur bei der (simultanen) Erzeugung einer oberen und einer unteren Deckschicht aus Polycarbonat bei im Wesentlichen 120°C liegt.

Insbesondere können Unebenheiten oder Störungen der Oberfläche der Vorformlings aufgrund der Aufspritzung der mindestens einen Deckschicht mit einer erhöhten und insbesondere optimalen Werkzeugtemperatur ausgeglichen und insbesondere beseitigt werden.

Weiterhin ist erkannt worden, dass im Gegensatz zum Stand der Technik der im Formwerkzeug erzeugte Druck, also der Nachdruck, während der Erzeugung des Vorformlings deutlich reduziert werden kann, ohne dass beim Endprodukt qualitative Nachteilen auftreten. Um Lunker und ähnliche Fehler zu vermeiden, wird bei herkömmlichen Spritzgießverfahren zum Erzeugen einer Schicht aus Polycarbonat ein Druck von mindestens 800 bar erzeugt. Bei dem erfindungsgemäßen Verfahrens wird in dem Formwerkzeug während der Erzeugung des Vorformlings ein Druck zwischen 250 bar und 500 bar erzeugt. Durch einen geringeren Druck können die inneren Spannungen noch weiter reduziert werden. Bessere optische Eigenschaften können erzielt werden. Darüber hinaus kann ein geringer Druck zu einer geringeren Belastung des Formwerkzeugs führen.

Darüber hinaus kann das Schichtdickenverhältnis gemäß einer anderen Ausführungsform zwischen dem Vorformling und den Deckschichten zwischen 60:40 bis 70:30 liegen. Im Gegensatz zum Stand der Technik, der von einem Verhältnis des Vorformlings zu den Deckschichten von stets 50:50 (bei drei Schichten 25% - 50% - 25%) ausgeht, ist erfindungsgemäß erkannt worden, dass ein Vorformling mit einer Schichtdicke, welche deutlich größer als die Schichtdicke der Deckschichten ist, erzeugt werden kann. Das Schichtdickenverhältnis kann insbesondere von Prozessparametern, welche hinsichtlich bestimmter Eigenschaften optimiert sein können, abhängen. Beispielsweise kann das Schichtdickenverhältnis in Anhängigkeit des (gezielt) gewählten Temperaturverlaufs im Querschnitt des gesamten Fertigteils zum Zeitpunkt des Entformens, des (gezielt) gewählten Temperaturverlaufs im Querschnitt des Gesamtbauteils zum Zeitpunkt des Überspritzens des Vorformlings bzw. Vorspritzlings, des (gezielt) gewählten Temperaturverlaufs im Querschnitt des Vorspritzlings zum Zeitpunkt des Entformens des Vorspritzlings, des (gezielt) gewählten Temperaturverlauf im Querschnitt des Vorspritzlings nach dem Ende des Einspritzens der Masse des Vorspritzlings, der zum Einsatz kommenden verschiedenen Kunststoffe sowohl für den Vorspritzling als auch für die Deckschichten und/oder der geforderten Bauteilqualitäten hinsichtlich Geometrietreue und inneren Eigenschaften des Fertigteils gewählt werden. Die o.g. Temperaturverläufe im Bauteil können durch die Massetemperatur des eingespritzten Kunststoffs, die Werkzeugwandtemperaturen und/oder die Verweildauern (Kühlzeiten) im geschlossenen Werkzeug jeweils von Vorspritzling und Deckschichten beeinflusst werden.

Insbesondere kann der Vorformling aufgrund der niedrigeren Werkzeugtemperatur eine höhere Schichtdicke aufweisen, ohne dass die Kühlzeit für das optische Bauelement erhöht wird. Dies bringt den Vorteil mit sich, dass die Schichtdicke der mindestens einen Deckschicht reduziert werden kann. Reduzierte Schichtdicken können zu besseren Oberflächeneigenschaften führen. Bei gleichbleibender Kühlzeit kann ein optischer Formkörper mit besseren Oberflächeneigenschaften hergestellt werden.

Grundsätzlich können bei zwei Deckschichten die Schichtdicken der beiden Deckschichten unterschiedlich sein. Gemäß einer bevorzugten Ausführungsform kann die Schichtdicke der oberen Deckschicht im Wesentlichen der Schichtdicke der unteren Deckschicht entsprechen. Eine gleichmäßigere Abkühlung des optischen Bauteils ist möglich. Geringere innere Spannungen treten auf.

Darüber hinaus kann gemäß einer weiteren Ausführungsform ein optischer Formkörper mit einer Dicke von mindestens 10 mm hergestellt werden. Es können insbesondere (dickwandige) optische Formkörper zwischen 10 mm und 40 mm, beispielsweise 20 mm oder 30 mm, hergestellt werden.

Gemäß einer weiteren Ausführungsform kann beim Erzeugen der mindestens einen Deckschicht während des Einspritzvorgangs eine optimale Formwerkzeugtemperatur (ca. 120°C) eingestellt werden und anschließend die Formwerkzeugtemperatur beispielsweise durch Wasserkühlung gekühlt werden. Die Abkühlzeit und somit die Herstellungszeit kann reduziert werden.

Ein weiterer Aspekt der Erfindung ist ein optischer Formkörper, insbesondere ein Linsenelement, hergestellt nach einem zuvor beschriebenen Verfahren.

Gemäß einer bevorzugten Ausführungsform des optischen Formkörpers kann das Schichtdickenverhältnis zwischen dem Vorformling und den Deckschichten zwischen 60:40 bis 70:30 liegen. Ferner kann die Schichtdicke der oberen Deckschicht im Wesentlichen der Schichtdicke der unteren Deckschicht entsprechen.

Ein noch weiterer Aspekt der Erfindung ist eine Verwendung eines zuvor beschriebenen optischen Formkörpers in einem Beleuchtungssystem a als Linse mit lichtemittierenden Dioden als Lichtquelle. Beispielhafte Beleuchtungssysteme sind Scheinwerfer, insbesondere Kraftfahrzeugscheinwerfers.

Straßenlaternen, Fassadenbeleuchtungen, Außenraumbeleuchtungen, Innenraumbeleuchtungen, technische Beleuchtung, etc.

In der Zeichnung zeigt:

Fig. 1     ein Flussdiagramm eines Ausführungsbeispiels eines Verfahrens gemäß der Erfindung zur Herstellung von optischen Bauteilen aus transparenten Thermoplasten durch Mehrschichtenspritzgießen,

Fig. 2     eine schematische Ansicht eines Ausführungsbeispiels eines durch das erfindungsgemäße Verfahren hergestelltes optisches Bauteil,

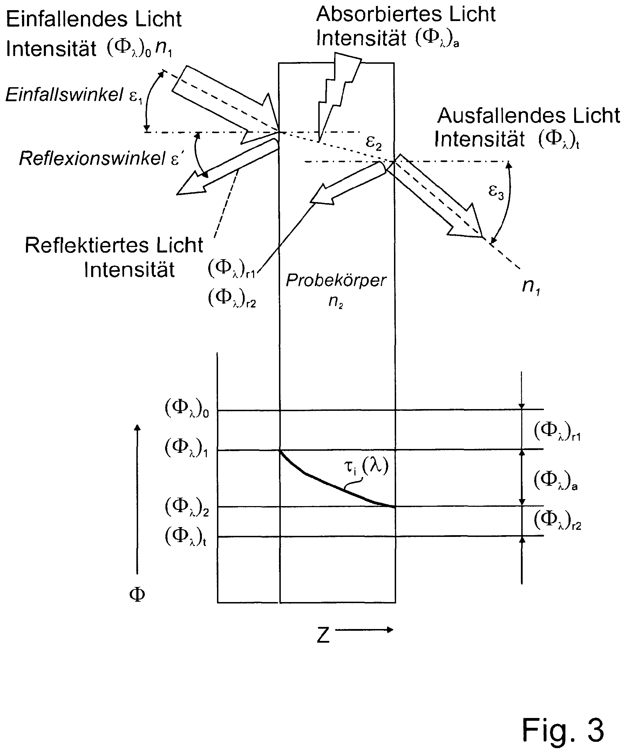

Fig. 3     eine schematische Ansicht eines Lichtdurchgangs durch eine Beleuchtungslinse,

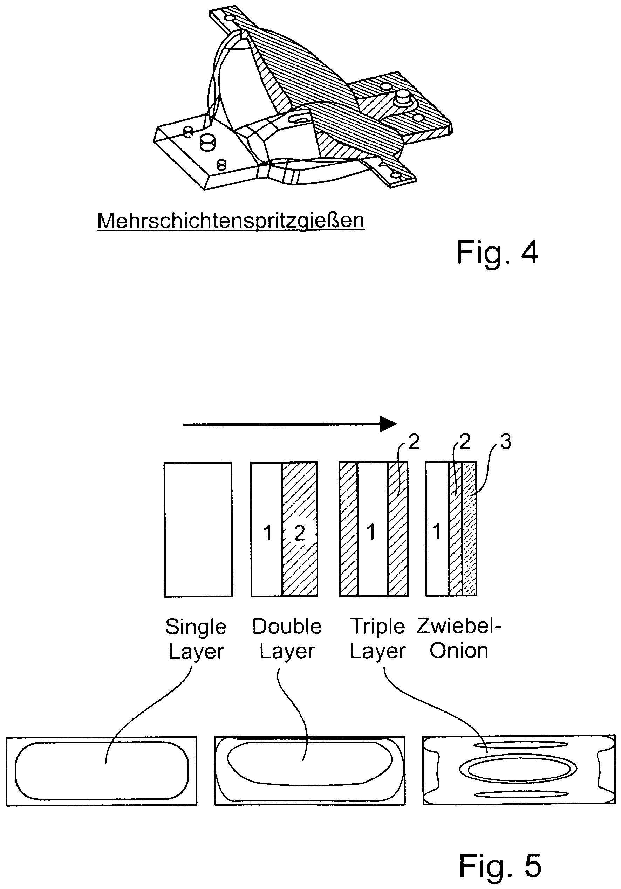

Fig. 4     eine schematische Ansicht eines Spritzgießbauteils hergestellt durch Mehrschichtenspritzgießen,

Fig. 5     eine schematische Ansicht von optischen Bauteilen und deren Temperaturverläufen beim Abkühlen,

Fig. 6     beispielhafte Diagramme zur Kühlzeit eines Spritzgießbauteils,

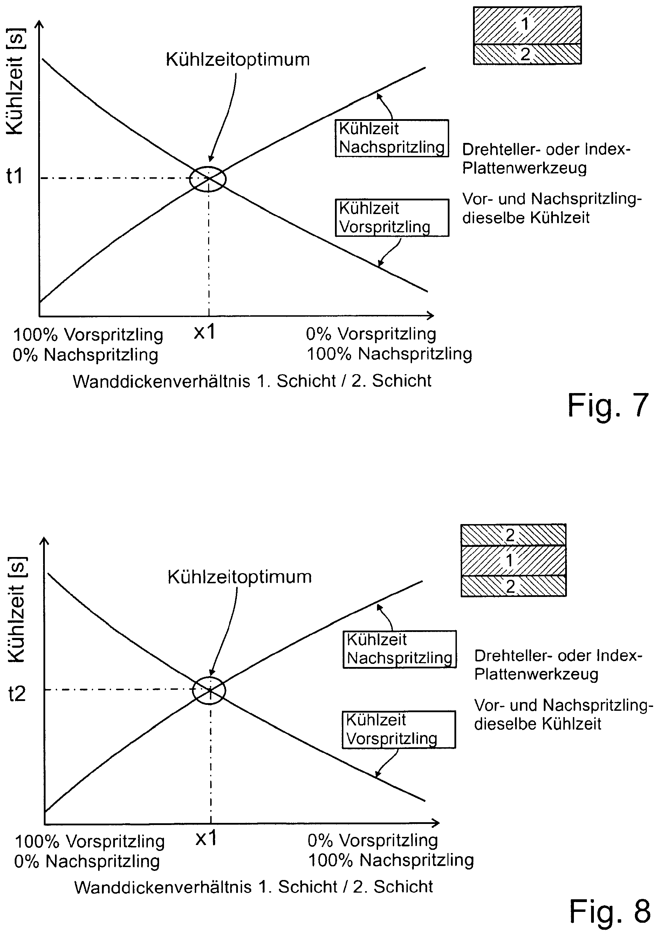

Fig. 7     ein Diagramm mit einem beispielhaften qualitativen Kühlzeitoptimum bei Zweischichtenlinsen aus Polycarbonat,

Fig. 8     ein Diagramm mit einem beispielhaften qualitativen Kühlzeitoptimum bei Dreischichtenlinsen aus Polycarbonat,

Fig. 9a    eine schematische Ansicht der Herstellung auf 2-Komponenten Spritzgießmaschine einer Einschicht-, Zweischichten- und Dreischichtenlinse,

Fig. 9b    eine weitere schematische Ansicht der Herstellung auf 2-Komponenten Spritzgießmaschine einer Einschicht-, Zweischichten- und Dreischichtenlinse,

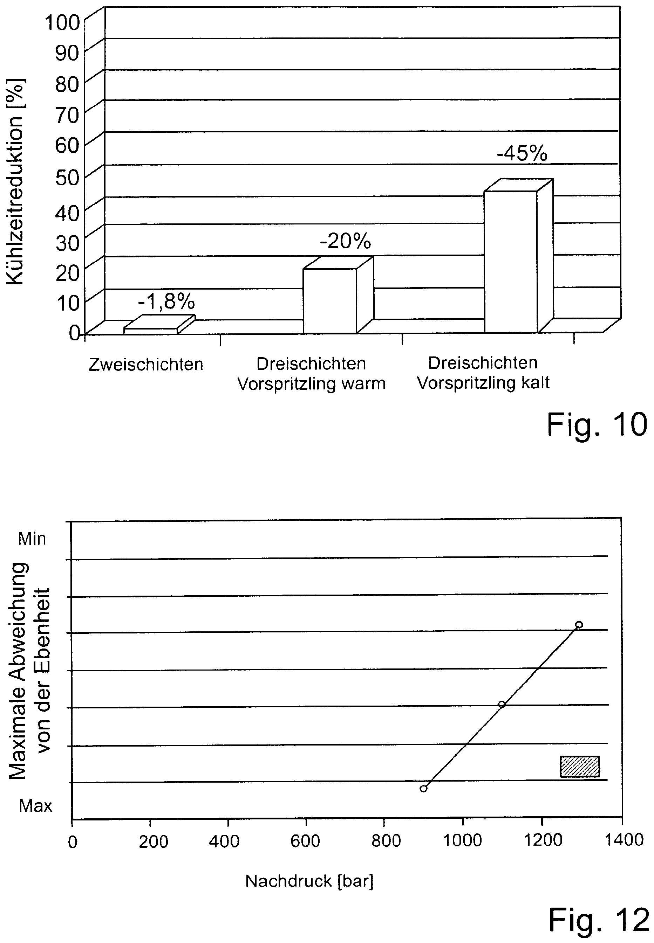

Fig. 10    ein Diagramm mit beispielhaften Kühlzeitenreduktionen von Zweischichten- und Dreischichtenlinsen im Vergleich zu einer Einschichtlinse,

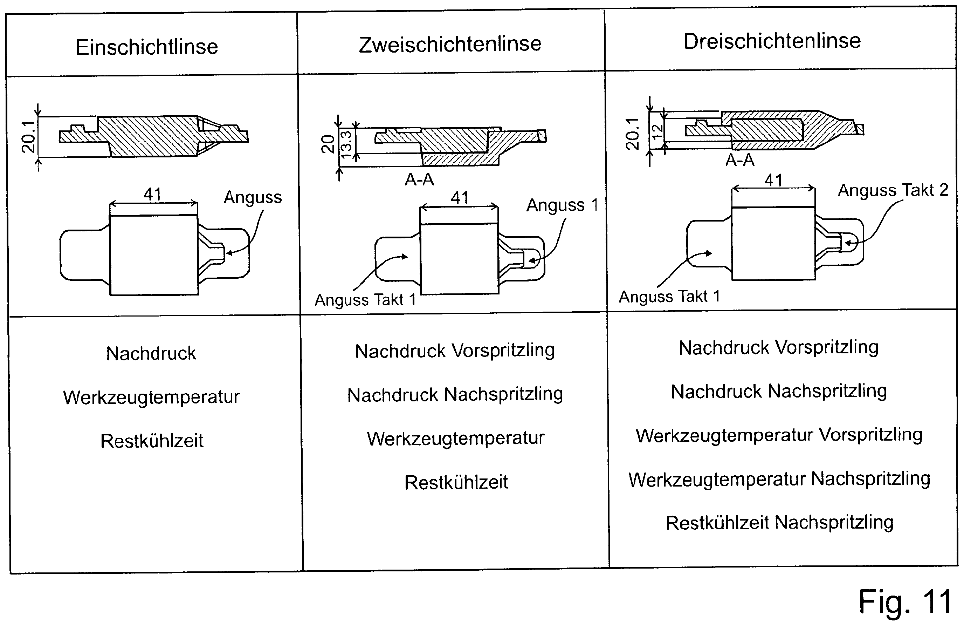

Fig. 11    eine schematische Ansicht von Linsenkörpern (aus Makrolon LED 2245) in Einschicht-, Zweischichten- und Dreischichtenausführung,

Fig. 12    ein Diagramm mit einem beispielhaften Verlauf der maximalen Abweichung von der Ebenheit in Abhängigkeit vom Nachdruck in einem Formwerkzeug,

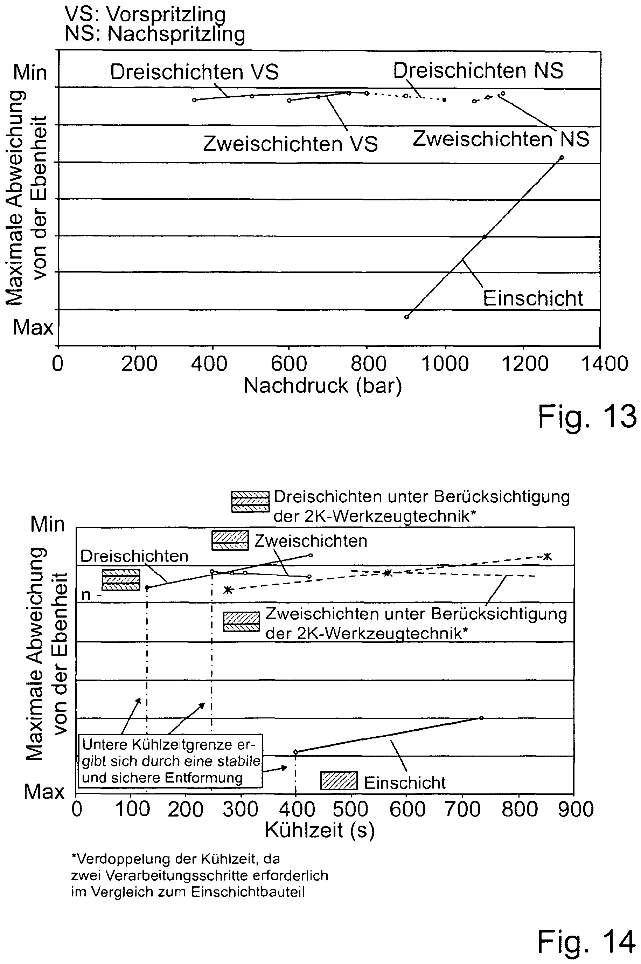

Fig. 13    ein Diagramm mit einem weiteren beispielhaften Verlauf der maximalen Abweichung von der Ebenheit in Abhängigkeit vom Nachdruck in einem Formwerkzeug,

Fig. 14    ein Diagramm mit einem beispielhaften Verlauf der maximalen Abweichung von der Ebenheit in Abhängigkeit von der Kühlzeit,

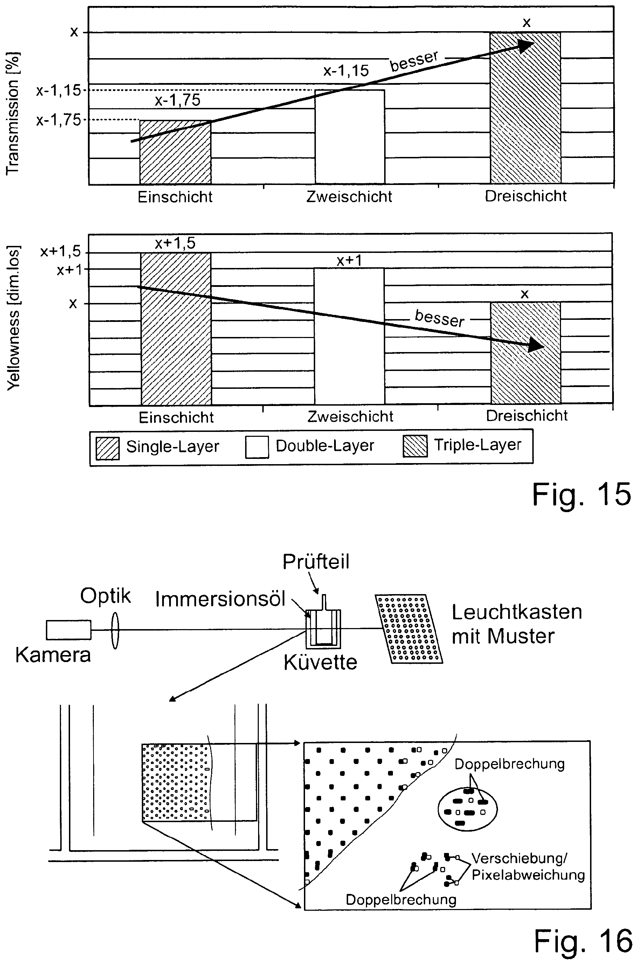

Fig. 15    ein Diagramm mit Mittelwerten gemessener Transmissions- und Yellowness Werte von Einschicht-, Zweischichten- und Dreischichtenlinsen,

Fig. 16    eine schematische Ansicht eines beispielhaften Messaufbaus und Messprinzips der Pixelverschiebung,

Fig. 17    ein Diagramm mit einem beispielhaften Verlauf des Prüfteils, des Öls und der Folie aus dem Aufbau gemäß Figur 16,

Fig. 18    eine schematische Ansicht eines beispielhaften Lichtdurchgangs durch ein Spritzgussbauteil,

Fig. 19      eine schematische Ansicht eines beispielhaften Messprinzips der Pixelverschiebung,

Fig. 20      ein beispielhaftes Diagramm, bei dem der Einfluss der Verarbeitung auf die "Pixelverschiebung" einer Dreischichtenlinse dargestellt ist, wobei die Werkzeugtemperatur zur Erzeugung des Vorformlings und die Werkzeugtemperatur zur Erzeugung der Deckschichten im Wesentlichen gleich sind,

Fig. 21      ein beispielhaftes Diagramm, bei dem der Einfluss der Verarbeitung auf die "Pixelverschiebung" einer Einschichtenlinse dargestellt ist, wobei die Werkzeugtemperatur zur Erzeugung des Vorformlings niedriger als die Werkzeugtemperatur zur Erzeugung der Deckschichten ist,

Fig. 22      ein beispielhaftes Diagramm, bei dem der Einfluss der Verarbeitung auf die "Pixelverschiebung" einer Einschichtenlinse dargestellt ist,

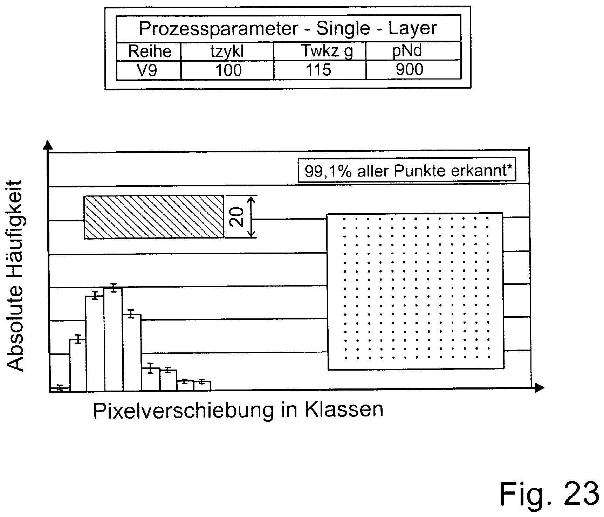

Fig. 23      ein beispielhaftes Diagramm, bei dem der Einfluss der Verarbeitung auf die "Pixelverschiebung" einer Einschichtenlinse dargestellt ist,

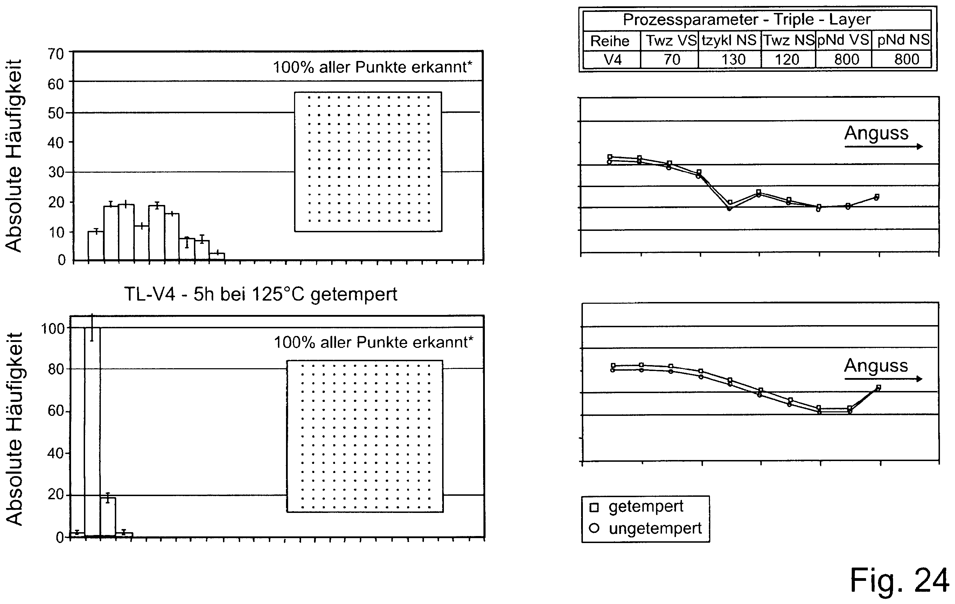

Fig. 24      ein beispielhaftes Diagramm, bei dem der Einfluss des Temperns bei Dreischichtenlinsen auf die "Pixelverschiebung" dargestellt ist,

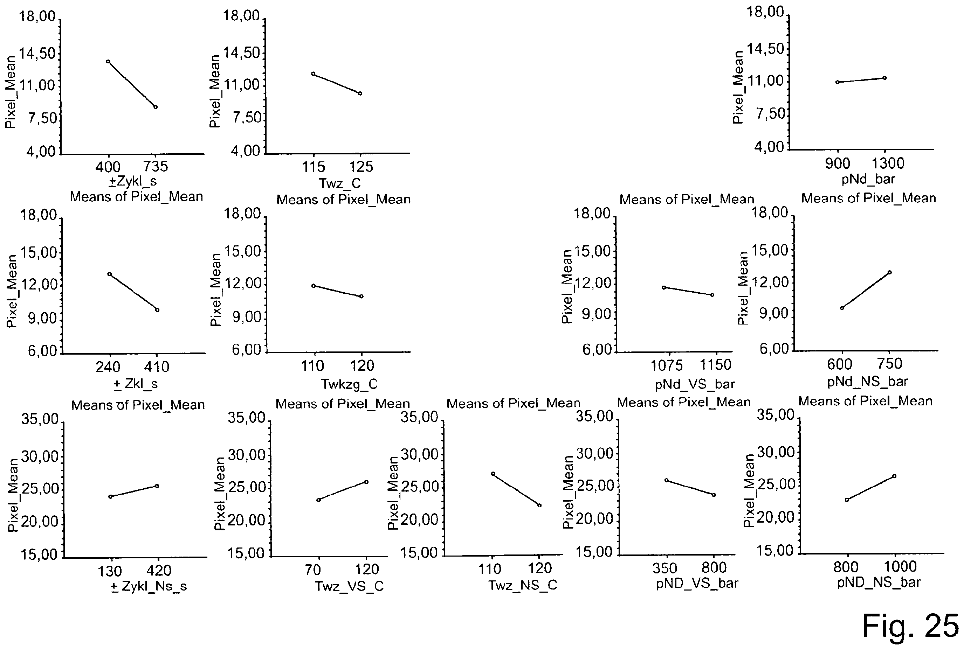

Fig. 25      eine schematische Ansicht von beispielhaften Pixel Mittelwerten,

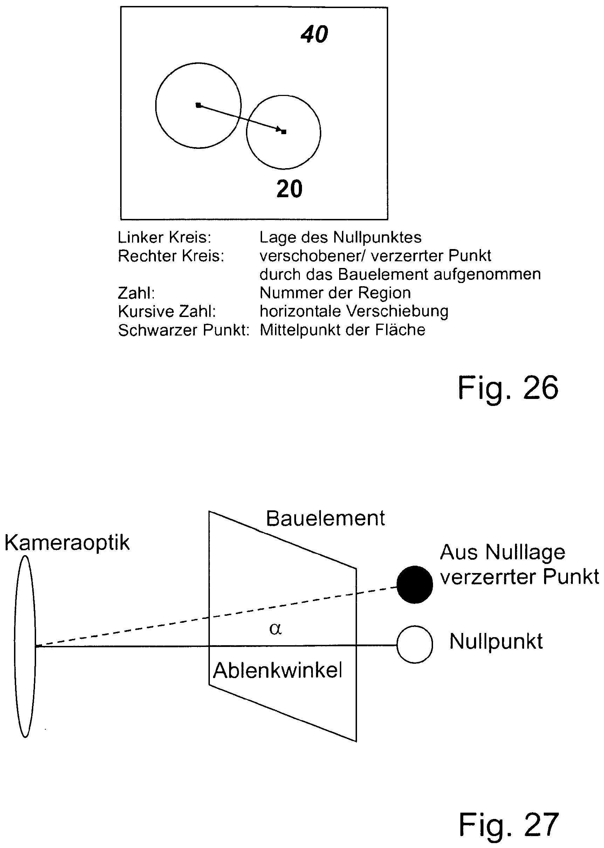

Fig. 26      eine schematische Ansicht einer beispielhaften Messung der Güte optischer Bauelemente,

Fig. 27      eine schematische Ansicht zur Darstellung des Ablenkwinkels, und

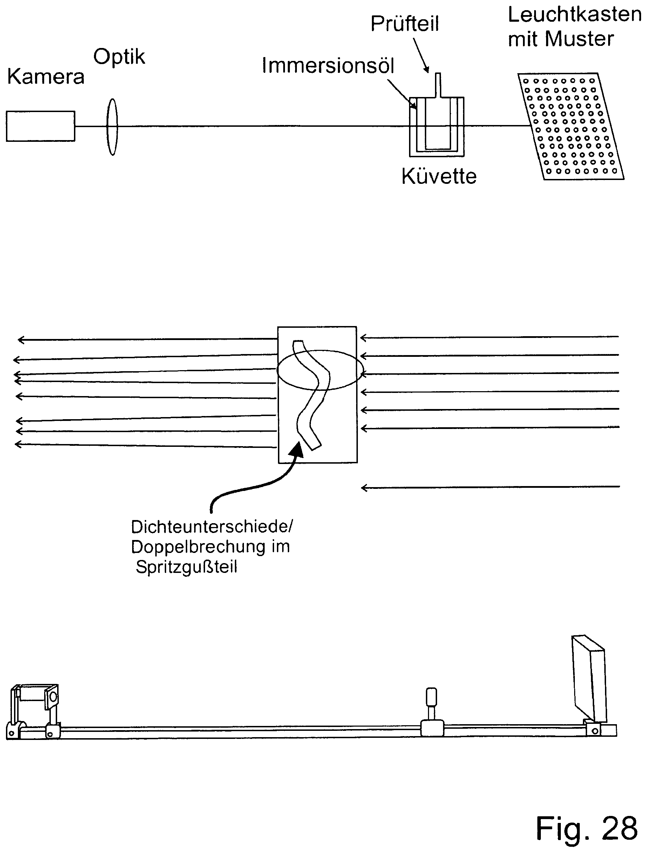

Fig. 28      eine schematische Ansicht eines beispielhaften Messaufbau zur Messung der Güte optischer Bauelemente.

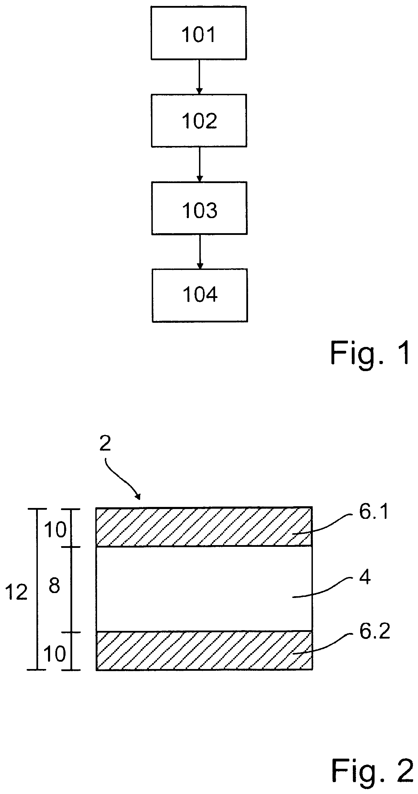

Figur 1 zeigt ein Flussdiagramm eines Ausführungsbeispiels eines Verfahrens gemäß der vorliegenden Erfindung. In einem ersten Schritt 101 wird der Vorformling in einem Formwerkzeug durch Spritzgießen gebildet. Als Material kann insbesondere ein transparenter Kunststoff verwendet werden. Bevorzugt wird der Vorformling aus Polycarbonat hergestellt.

Die Temperatur des Formwerkzeugs, insbesondere die Temperatur der Kavitäten des Formwerkzeugs, wird auf einen Wert eingestellt, der 30 % bis 60 % unterhalb der Temperatur des Formwerkzeugs liegt, welche bei der Erzeugung der mindestens einen Deckschicht eingestellt wird. Vorzugsweise kann die Temperatur zwischen 30 % und 50% reduziert sein. Insbesondere bei Polycarbonat kann eine Werkzeugtemperatur von 60°C bis 80°C, bevorzugt ca. 70°C, eingestellt werden. Es ist überraschender Weise festgestellt worden, dass insbesondere in einem Temperaturbereich um 70°C, also ca. 65°C bis 75°C, innere Spannungen im Formteil reduziert werden können. Gleichzeitig kann die Herstellungszeit reduziert werden.

Während der Erzeugung des Vorformlings ist der Druck gegenüber einem optimalen Druck reduziert. Bei Erzeugung eines Vorformlings aus Polycarbonat wird ein Druck von ca. 250 bar bis 500 bar erzeugt. Auch hierdurch können innere Spannungen im optischen Formteil reduziert werden.

Die mindestens eine Deckschicht, bevorzugt beide Deckschichten, werden in einem nächsten Schritt 102 durch Spritzgießen aufgebracht. Bevorzugt kann das gleiche Polycarbonat wie bei der Erzeugung des Vorformlings eingesetzt werden. Vorzugsweise kann eine Dreischichtenlinse erzeugt werden. Auf den Vorformling kann eine obere und eine untere Deckschicht aufgebracht werden. Wenn die Aufspritzung simultan erfolgt, können die inneren Spannungen im Formteil weiter reduziert werden.

Insbesondere kann ein simultanes Spritzgießen der oberen und der unteren Deckschicht bei einer optimalen Werkzeugtemperatur durchgeführt werden. Unter einer optimalen Werkzeugtemperatur ist insbesondere die Temperatur zu verstehen, bei der eine Schicht bzw. ein Formkörper mit (nahezu) optimalen optischen Eigenschaften hergestellt werden kann. Unter einem optimalen Druck ist insbesondere der Druck zu verstehen, bei dem eine Schicht bzw. ein Formkörper mit (nahezu) optimalen optischen Eigenschaften hergestellt werden kann. Bei Polycarbonat liegen die optimale Werkzeugtemperatur bei ca. 120°C.

Nach einer Abkühlphase kann das optische Formteil in einem Schritt 103 aus der Kavität entnommen werden. Darüber hinaus können in einem nächsten Schritt 104 weitere Verarbeitungsschritte folgen.

Figur 2 zeigt ein Ausführungsbeispiel eines nach dem zuvor beschriebenen Verfahren hergestellten optischen Formkörper 2. Insbesondere kann der Formkörper 2 transparent gebildet sein. Vorzugsweise kann der Formkörper 2 ein Linsenelement 2 sein. Der optische Formkörper 2 kann bevorzugt in Beleuchtungssystemen, beispielsweise als Linsenelement 2 für einen LED-Kraftfahrzeugscheinwerfer, verwendet werden.

Der dargestellte optische Formkörper 2 umfasst einen Vorformling 4 bzw. eine mittlere Kunststoffschicht 4. Auf den beiden breiten Oberflächen des Vorformlings 4 ist eine obere Deckschicht 6.1 und eine untere Deckschicht 6.2 angeordnet.

Der optische Formkörper 2 weist eine Dicke 12 von 10 mm bis 30 mm auf. Die Dicke 8 des Vorformlings 4 ist gemäß dem vorliegenden Ausführungsbeispiel größer als die Dicke 10 einer Deckschicht 6.1, 6.2. Wie zu erkennen ist, entspricht im vorliegenden Ausführungsbeispiel die Schichtdicke 10 der oberen Deckschicht 6.1 im Wesentlichen der Schichtdicke 10 der unteren Deckschicht 6.2. Das Verhältnis der Schichtdicke 8 des Vorformlings 4 zu den Schichtdicken 10 der Deckschichten 6.1, 6.2 kann vorzugsweise zwischen 70:30 und 60:40 liegen.

Beispielsweise kann die Schichtdicke 12 des optischen Formkörpers 20 mm betragen. Die Schichtdicke 8 des Vorformlings 4 kann ca. 12 mm und die Schichtdicke 10 der Deckschichten 6.1, 6.2 ca. 4 mm betragen.

Es versteht sich, dass grundsätzlich komplexere Formen erzeugt werden können und insbesondere der Schichtdickenverlauf eines Elements variieren kann.

Es sei ferner angemerkt, dass in den nächsten Jahren im Bereich der LED-Technologie vor allem nichtabbildende Beleuchtungen in den Fokus rücken werden, während der Schwerpunkt der Entwicklungen in den vergangenen Jahren vor allem im Bereich der abbildenden Optiksysteme lag. Im Gegensatz zur abbildenden Optik geht es nicht um die Erzeugung eines Abbildes der Lichtquelle. Die Art der Ausleuchtung des Ziels ist das vorwiegende Interesse dieses Fachgebietes der Optik. Hierbei wird eine gewisse Lichtverteilung bei gegebener Lichtquelle erzeugt. Die Lichtverteilung geschieht durch reflektierende und transmittierende Materialen, deren Oberfläche das auftreffende Licht reflektiert, bricht und auch beugt. Diese Materialien werden als optisch passiv bezeichnet. In Kombination mit der Lichtquelle entsteht das optische System. Das Optikdesign ist zur Steigerung der Effizienz und zur optimalen Lichtumverteilung notwendig.

Im Bereich der nichtabbildenden Optik und ganz besonders in der Beleuchtungsoptik ergeben sich für die Kunststoffe neue Möglichkeiten. Durch die Entwicklung der LED-Beleuchtungsmittel können neue Bereiche erschlossen werden, für die es noch keine Optiksysteme gegeben hat. Durch die lange Lebensdauer und die Energieeffizienz der LED gegenüber den konventionellen Leuchtmitteln haben viele Industriebranchen großes Interesse an der LED Beleuchtung. Im Automobilbau kommen als Argumente für den Einsatz von Thermoplasten in der Beleuchtungsoptik noch die Gewichtsersparnis im Vergleich zu Glas und die Möglichkeit der Funktionsintegration hinzu.

Die neuen Beleuchtungsoptiken fordern heute hoch komplexe, freigeformte, halbbrechende und halbreflektierende Optiken, die in Glas nur noch schwer herstellbar sind. Des Weiteren sind Massenanwendungen, die den Einsatz der Spritzgusstechnik rechtfertigen, im Bereich der Beleuchtungsoptik häufig anzutreffen. Die optischen Anforderungen sind für viele Beleuchtungsanwendungen ebenfalls hoch, doch im direkten Vergleich mit den abbildenden Optiken in Kunststoffoptiken leichter umsetzbar. So sind Abbildungsfehler von untergeordneter Bedeutung und der Optikdesigner hat mehr Geometrie-Freiheitsgrade in der Auslegung seiner Optik. Hierdurch können Nachteile in den optischen Eigenschaften der Kunststoffe (z.B. Temperaturabhängigkeit der Brechzahl und der Geometrie) eher ausgeglichen und/oder toleriert werden.

Wie oben beschrieben ergeben sich für die optischen Kunststoffe in der Beleuchtungsoptik große Anwendungspotentiale. Es liegen jedoch prozesstechnische Herausforderungen vor, die im Nachfolgenden kurz erläutert werden:

Vorraussetzung für die Funktionserfüllung vieler Beleuchtungsoptiken ist es, dass Streu- und Intensitätsverluste, sowie Lichtstrahlablenkungen gering gehalten werden. Die Funktionserfüllung wiederum wird aus der Geometrie der Funktionsoberflächen (Form, Welligkeit und Rauhigkeit) und von den inneren Eigenschaften (Transmission, Absorption, Dispersion, Spannungen, Dichteverteilungen) integral erreicht.

Dies bedeutet, dass die Abformungsgenauigkeit der optischen Funktionsflächen an denen Licht ein- und ausgekoppelt wird, sehr hoch sein muss. In Bezug auf Einfallstellen und Formabweichung sind Genauigkeiten im unteren zweistelligen mm-Bereich erforderlich und bei den Oberflächenrauhigkeiten sogar im einstelligen nm-Bereich notwendig. Zum anderen beutet dies auch, dass das Formteilvolumen möglichst geringe innere Spannungen, Verunreinigungen und anisotrope Materialeigenschaften aufweißen muss, um die optischen Eigenschaften nicht negativ zu beeinflussen.

Die beschriebenen Herausforderungen machen deutlich, welche Anforderungen an den Spritzgießprozess gestellt werden. Zum einen entsteht durch den Spritzgießprozess eine örtlich und zeitlich unterschiedliche Druck-, Temperatur- und Orientierungsverteilung im Formteil. Hierdurch kommt es zu einer mehr oder weniger stark ausgeprägten optischen Anisotropie durch z.B. Molekülorientierungen, Dichteverteilungen, und Polarisation, die, wie oben beschrieben, das optische Verhalten beeinflussen können. Zum anderen muss entlang der gesamten Prozesskette auf eine sehr saubere und schonende Herstellung geachtet werden, da alle Arten von Verunreinigungen und Störstellen wie Lunker, Einschlüsse, Fließlinien, die die optischen Eigenschaften negativ beeinflussen, vermieden werden müssen.

Weiterhin überlagern sich diese prozessbedingten Anforderungen mit der aus dem Optikdesign resultieren Geometriegestaltung. Oftmals werden sehr kompakte Linsenkörper mit großen Wanddicken benötigt. Linsen, die hier den Schwerpunkt bilden, können im Sinne der Kunststofftechnik als dickwandig bezeichnet werden. 10mm, 20mm und 30mm sind gängige Wanddicken, die je nach Optikdesign und Funktionsintegrationen außerdem noch stark variieren können. Die dicken Formteilbereiche erstarren langsamer als die dünnen Bereiche, so dass es zu ungewollter Schmelzestagnation in dünnen Bereichen und zu einer schlechteren Druckübertragung besonders in der Nachdruckphase in die dickwandigen Bereiche kommen kann. Hierdurch werden eine gleichmäßige Formteilfüllung und die geforderten Abformpräzision der optischen Flächen erschwert. Die großen Wanddicken führen außerdem zu sehr langen Kühlzeiten. Je nach Wanddicke können diese zwischen 5 und 20 Minuten und teilweise noch darüber liegen. Durch die hiermit verbundenen langen Verweilzeiten in der Plastifiziereinheit der Spritzgießmaschine ist die thermische Belastung der Kunststoffe und damit die Gefahr von Materialschädigungen größer als bei anderen Anwendungen. Weiterhin werden durch die langen Kühlzeiten eine kontinuierliche Prozessführung, - kontrolle und Versuchsplanung erschwert. Nicht zuletzt werden die Kosten für diese Bauteile durch die langen Kühl- und Zykluszeiten negativ beeinflusst.

Zusammengefasst lässt sich für die hier betrachteten Optiken feststellen, dass sich hohe prozesstechnischen Herausforderungen aus der vom Optikdesign geforderten, sehr hohen Präzision und Sauberkeit in Verbindung mit dem für die Kunststoffverarbeitungstechnik sehr ungünstigen dickwandigen Geometrien ergeben. Wichtige Bausteine der Prozesskette zur Herstellung dieser Teile befinden sich heute noch in der Entwicklungs- und Erprobungsphase, insbesondere solche, die die geforderte Beleuchtungsqualität bei möglichst kurzer Zykluszeit erreichen.

Mit dem Mehrschichtenspritzgießen wird vom dem klassischen Weg des Spritzgießens oder Spritzprägens abgewichen und versucht, durch eine schichtweise Herstellung ein optisches Bauteil zu fertigen. Bei der schichtweisen Herstellung sind die Einzelschichten dünner als die Gesamtwanddicke, so dass eine Reduzierung der Kühlzeit möglich ist, da die Summe der Kühlzeiten der einzelnen Schichten geringer ist, als die Kühlzeit im Einschichtverfahren. Erste theoretische Abschätzungen sagen für das Mehrschichtenspritzgießen ein großes Potential zur Zykluszeitreduzierung voraus. Das vom BMBF geförderte Projekt "Autolight" (unter der Trägerschaft des VDIs) hat in einem Teilprojekt die Aufgabe, die Simulationstechniken zur Voraussage der günstigsten Schichteneinteilung, bei komplexen Freiformoptiken wesentlich zu verbessern. Insbesondere auch durch quantitative Kühlzeitvorhersagen kombiniert mit der Einbeziehung von Qualitätsvorhersagen in die Simulation.

Des Weiteren stellt sich die Frage, ob es Unterschiede in der Erreichung von bestimmten optischen und geometrischen Qualitätsmerkmalen zwischen optischen Bauteilen gibt, die im Einschicht-, Zweischicht- oder Dreischichtenspritzguss hergestellt werden.

Detaillierte praktische Untersuchungen hierzu werden derzeitig in einer Studie bei Bayer Material Science durchgeführt. Kern dieser Untersuchung ist es, an einen optischen Bauteil wesentliche Unterschiede des Mehrschichtenspritzgießens im Vergleich zum Standardspritzgießen aufzuzeigen. Hierzu werden vergleichende Versuche an einer optischen Geometrie durchgeführt, die im Einschicht- , Zweischichten- und Dreischichtspritzgießen hergestellt wurden.

Das Spektrum der Anforderungen für optische Bauteile ist vielfältig. Die Anforderungen können wiederum abhängig vom jeweiligen Anwendungsgebiet der Beleuchtungsoptik unterschiedlich gewichtet sein. Die Anforderungen werden, wie oben erwähnt, durch die Kombination von Materialeigenschaften und Geometrie erfüllt werden. Hierbei ist die Kenntnis des Einflusses und der Grenzen des Herstellprozesses sehr wichtig, da durch diesen sehr großen Einfluss auf die späteren Eigenschaften genommen werden kann.

Geometrisch Anforderungen können sein Kontur, Oberfläche, Rauhigkeit, Krümmungsradius, Abmessung, Winkel und Toleranzen. Optische Anforderungen können sein Brechzahl / Dispersion, Reflexionsgrad, Transmission, Absorption, Streuung, Eigenfarbe, Doppelbrechung. Visuelle Anforderung können sein Brillanz, Lunker, Einschlüsse, Oberflächenfehler (Schlieren, Einschlüsse), Verschmutzung und Fließlinien. Lichttechnische Anforderungen können sein Leuchtmittel, Ausleuchtung, Lichtverteilung, Farberscheinung, gesetzliche Anforderungen. Umweltanforderungen können sein Temperaturstabilität, Feuchtigkeit, Chemische Beständigkeit, Vergilbung, E-Modul, Konstruktive Integration, Mechanik und Toleranzen. Wirtschaftliche Anforderungen können sein Zykluszeit, Stückzahl, Fixkosten, Werkzeug- und Maschinenaufwand, Ausschuss und Toleranzen.

LED Licht weist keinen bzw. nur einen geringen UV und IR Anteil auf und erlaubt neue Optiken. Die Vorteile des Spritzgießprozesses in der Oberflächenabformung und Formenvielfalt kann in der Beleuchtungs- und Sensorenoptik voll ausgenutzt werden. Massenanwendungen, bei denen sich die Abformung im Spritzgießprozess zu lohnen beginnt, befinden sich der Beleuchtungs- und Sensorenoptik. Die mit transparenten Kunststoffen erreichbaren Qualitäten passen mit den Anforderungen von präzisen Beleuchtungsoptiken und Sensoren überein.

Zum Potential und zu den Herausforderungen der transparenten Kunststoffe für Beleuchtungsoptiken:

Potential liegt vor, da komplexe, freigeformte, halbbrechende und halbreflektierende Optiken in der Massenfertigung in Glas nur noch schwer herstellbar sind.

Herausforderung sind die Beleuchtungseigenschaften, wie die Geometrie der Funktionsoberfläche (Form, Welligkeit und Rauhigkeit) und die inneren Eigenschaften (Transmission, Absorption, Dispersion, Spannungen), geringe Streu- und Intensitätsverluste, sowie Lichtstrahlablenkungen, daher hohe Abformungsgenauigkeit der optischen Funktionsflächen Spritzgießprozess erzeugt optisch anisotropes Materialgefüge (Dichte, Spannungen, Orientierungen, Polarisation), hohe Reinheitsanforderungen d.h. keine Verunreinigungen und Störstellen wie Lunker, Einschlüsse, Fließlinien, kompakte Linsenkörper mit großen Wanddicken (10mm, 20mm und 30mm). Hierdurch wird eine gleichmäßige Formteilfüllung und Druckübertragung erschwert. Die großen Wanddicken führen außerdem zu sehr langen Kühlzeiten.

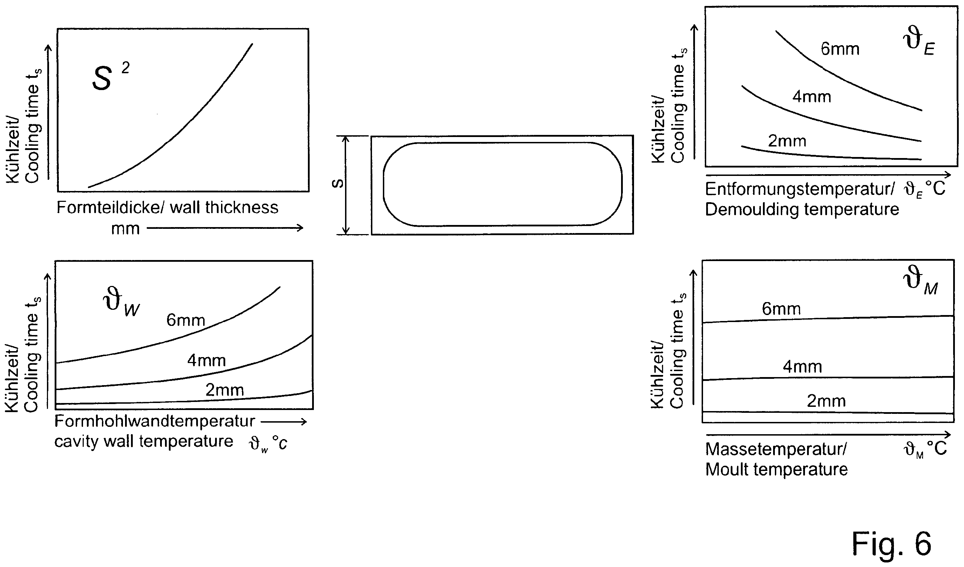

Grundbetrachtungen zur Kühlzeit (siehe Fig. 6):

$$t_k = \frac{s^2}{\pi^2 a_{2ff}} \ln\left(\frac{8}{\pi^2}\Theta\right),$$

$$\Theta = \left(\frac{\vartheta_M - \overline{\vartheta}_W}{\vartheta_E - \overline{\overline{\vartheta}}_W}\right).$$

Erste theoretische Betrachtungen zeigen für das Mehrschichtenspritzgießen ein großes Potential für die Reduzierung der Zykluszeit auf. Umfassende Validierung der Simulation der Kühlzeit für Mehrschichtensysteme und komplizierte Freiformoptiken in dem BMBF Projekt "Autolight" insbesondere unter Einbeziehung der Voraussage von erreichbaren Qualitäten.

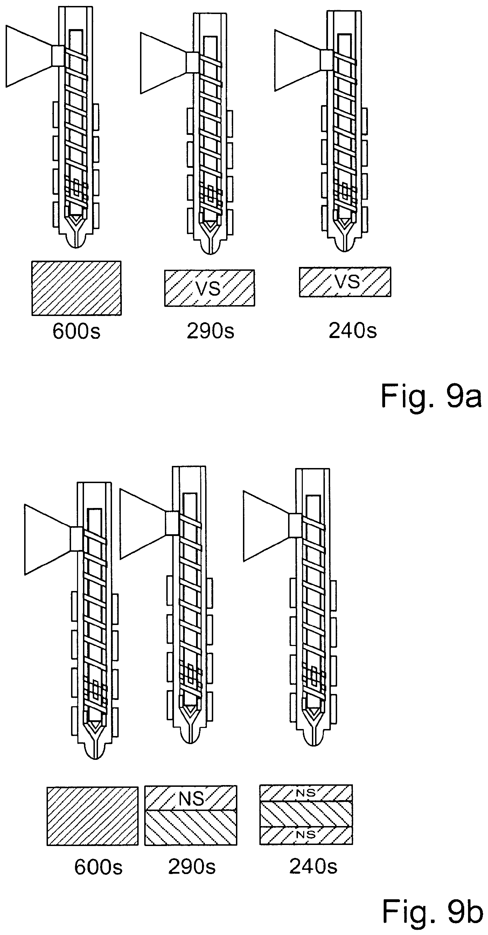

Beispiel: Herstellung auf 2-Komponenten Spritzgießmaschine einer Einschicht-, Zweischicht- und Dreischichtlinse (siehe Fig. 9a, 9b). Wie insbesondere zu erkennen ist, kann die Zykluszeit bei einer Dreischichtlinse im Vergleich zu einer Einschichtlinse um über 50 % reduziert werden.

Linsen Gesamtdicke S =20 mm
Massetemperatur JM = 280°C
Werkzeugtemperatur Vorspritzling VS =120°C
Werkzeugtemperatur Nachspritzling NS =120°C
Wärmeübergangskoeffizient a = 2000 W/m2K
Entfomungstemp. in Formteilmitte JE= 150°C
Alle 600 s zwei Einschichtlinsen
Alle 290 s eine Zweischichtlinse
Alle 580 s zwei Zweischichtlinsen
Alle 240 s eine Dreischichtlinse
Alle 480 s zwei Dreischichtlinsen

Nicht validierte, theoretische Ergebnisse: Betrachtet wurde hier nur die reine Kühlzeitreduktion. Zeitanteile, welche beim Mehrschichtenspritzgießen durch die zusätzliche Werkzeug-Zwischenöffnung und das Einspritzen entstehen, sind hier nicht berücksichtigt.

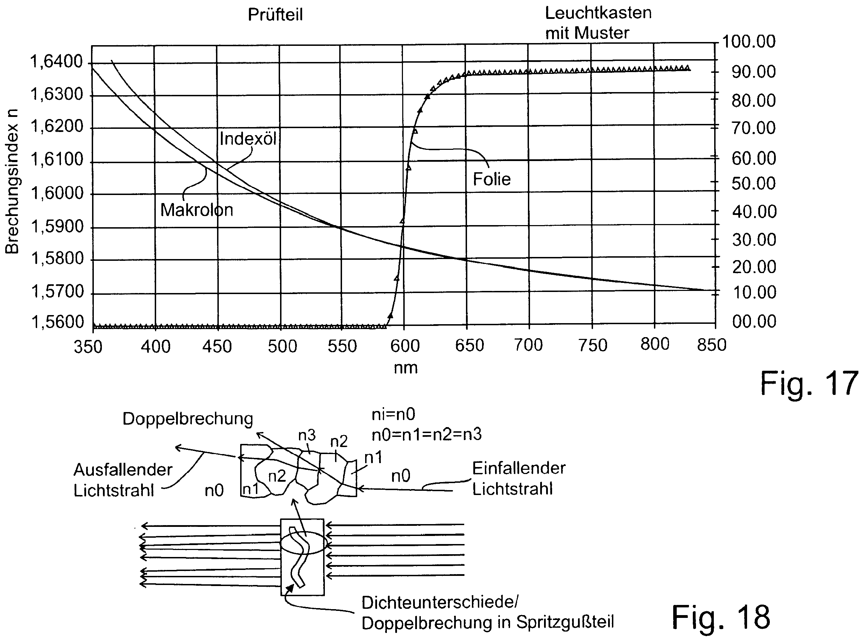

In einem inhomogenen Medium ist der Brechungsindex nicht konstant (siehe Fig. 18). Gradienten der Brechungsindexänderung (Richtung der stärksten Änderung). An dieser Grenzfläche gilt für den passierenden Lichtstrahl des üblichen Brechungsgesetzes. Der Lichtstrahl wird in Richtung des Gradienten gebrochen. Addiert man diese Änderungen ergibt sich ein im Allgemeinen ein nicht gerader Lichtweg und eine ungleichmäßige Punkteverschiebung. Ist Brechungsindex und auch sein Gradientenfeld in einem anisotropen Medium für zwei Polarisationsrichtungen verschieden ergibt sich eine Punktaufspaltung. Wenn Medium anisotrop und inhomogen ist addieren sich beide Effekte. Der Fall liegt im Spritzgussteil vor.

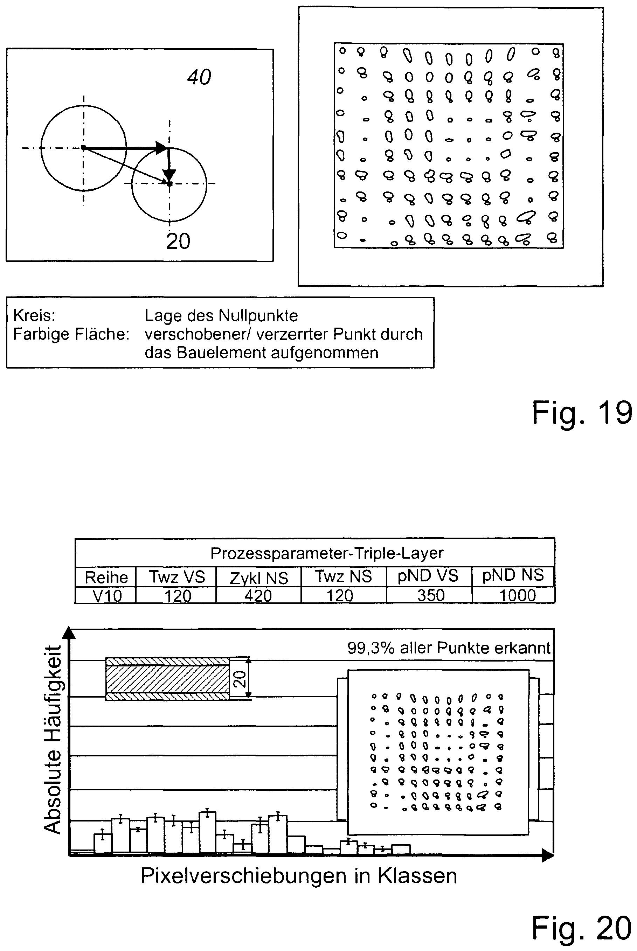

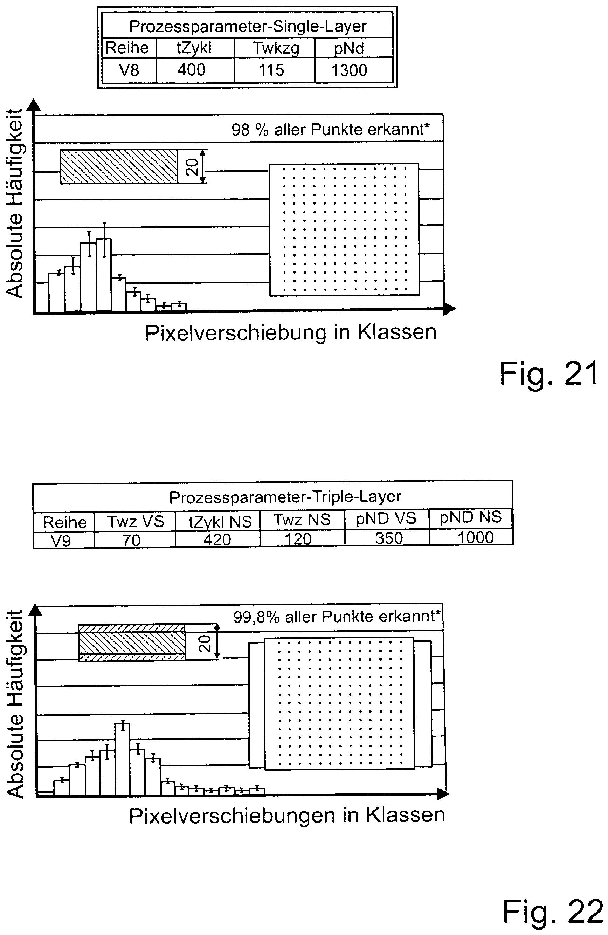

Die Werkzeugtemperatur des Vorspritzlings bzw. Vorformlings (TWZ VS) hat großen Einfluss im Gesamtverbund auf die Pixelverschiebung (siehe Fig. 20 und 21).

Geringere Drücke bei besserer Oberflächenabformung können bei den Mehrschichtenbauteilen erzielt werden. Sehr positiver Einfluss auf die Transmission und den Yellowness-Index bei Polycarbonat bei dem Dreischichtensystem. Einfluss des Herstellungsverfahrens und der Verarbeitung darstellbar.

Weitere Ausführungsformen betreffen eine Messapparatur und ein Verfahren zur Messung der Güte optischer Bauelementelemente in Transmission.

Um die Verzerrung des Bauelements zu bestimmen wird die Strahlablenkung abhängig von der Position im Bauelement untersucht. Es wird die Verschiebung der Punkte aus ihrer Solllage bestimmt, wenn diese durch das Bauelement hindurch aufgenommen werden. Zu diesem Zweck ist folgender Aufbau realisiert worden. Mit einer Beobachtungseinheit, insbesondere einer IDS μEye CMOS Kamera, wird über ein 200mm Objektiv eine Objekteinheit, insbesondere eine Punktematrix, durch das Bauelement aufgenommen. Die Punktematrix besteht aus einer Transparentfolie mit 1mm großen schwarzen Punkten im Abstand von 3,5mm, montiert auf einem Leuchtkasten.

Um Oberflächeneffekte, wie Krümmungen, Kratzer und Angusskanten, des Bauelements auszuschließen wird das Bauelement nach einer vorteilhaften Ausgestaltung der Erfindung in einer Küvette umgeben von Immersionsöl gleicher Brechkraft wie das Spritzgussteil vermessen. Die Küvette besteht aus einem Metallrahmen mit Führungen zur optimalen Positionierung des Bauelements und zwei Borosilikat Fenstern, die parallel zueinander angeordnet sind. Zur Feinabstimmung der Brechzahl des Immersionsöls mit dem PC-Bauelement wird in einem Wellenlängenbereich von 650 - 700 nm gemessen.

Um jegliche Fehler der Küvette auszugleichen wird zuerst ein Nullbild mit Küvette und Immersionsöl angefertigt. Es werden bevorzugt drei Nullbildaufnahmen erstellt, bei denen das Öl gerührt wird um Inhomogenitäten des Öls zu minimieren. Dies ist notwendig, da das Immersionsöl nicht homogen ist.

Nach einer vorteilhaften Ausgestaltung der Erfindung ist eine Auswerteeinheit vorgesehen, welche mit der Beobachtungseinheit datentechnisch verbunden ist, wobei die Auswerteeinheit eingerichtet ist, um die Verzerrungen ortsaufgelöst zu quantifizieren. Diese und deren Betriebsweise werden im Folgenden rein beispielhaft beschrieben:

Softwareauswertung:

Bei der Kreiserkennung im Bild werden alle Pixel die einen Grauwert kleiner 65 (Bild des Spritzgussteils Grauwert kleiner 75) als Region ausgewählt. Diese Region wird in einzelne zusammenhängende Regionen unterteilt. Regionen, die eine kleinere Fläche als 900 Pixel (Bauelement 150 Pixel) besitzen, werden nicht berücksichtigt.

Für die Position der Nullbildpunkte werden die Mittelwerte aus drei Nullbildern, die vor jeder Messteilreihe angefertigt wurden, gebildet, um eine Verschiebung der Messanordnung aufzufangen.

Danach werden in den Bauelementbildern die verzerrten Kreise als Regionen extrahiert und deren Positionen bestimmt. In einem Iterationsverfahren werden die nächstliegenden Nullkreise zu den verzerrten Kreisbildern zugeordnet. Dies geschieht in Schritten von 10-20 Pixeln, damit keine Fehlzuordnung stattfindet. Bei den Bildern einiger Versuche müssen zusätzliche Bedingungen für die Nullzuordnung erfüllt sein, um Fehlauswertungen zu vermeiden. Zum Beispiel müssen bei einigen Serien in dem linken Bereich des Bildes die Punktbilder immer rechts von den Nullbildern sich befinden.

Der Abstand der Punkte zum Nullpunkt ist immer die kürzeste Diagonale.

Die zugeordneten Regionen werden abhängig vom horizontalen oder vertikalen Abstand zu den Nullkreisen verschiedenfarbig eingefärbt.

10 Pixel forrest green
20 Pixel green
30 Pixel khaki
40 Pixel goldenrod
50 Pixel indian red
70 Pixel red
90 Pixel red
100 Pixel red

Die Abweichung der Kreisposition von der Nullposition ist ein Maß für die Verzerrung des Bauelements, das durch eine nicht geordnete Struktur der Polymerkristalle hervorgerufen wird (Doppelbrechung, Brechzahlgradienten).

Die Verschiebungen aller abgebildeten Punkte werden als farbcodiertes Regionenbild mit überlagerten Nullregionen ausgegeben. Die obere schwarze Zahl über der Region gibt die Pixelverschiebung an. Die weiße Zahl ist die Nummer der Region.

Die Winkelverschiebung der Position im Bauelement ergibt sich aus dem Abstand des Bauelements zur Kameraoptik, dem Maßstab und der Pixelverschiebung.

$$\alpha = \arctan\left(\frac{Pixelverschiebung * Maßstab}{Kameraoptik - Punktematrix}\right)$$

Eine Abweichung von 10 Pixeln ergibt eine Winkelabweichung von 0,005 ° oder 0,000087 RAD.

Kameraeinstellungen:

Die Beleuchtung ist eine Leuchtstoffröhre, die mit 500Hz betrieben wird, um Helligkeitsschwankungen zu vermeiden. Die Aufnahmen werden mit einer Integrationszeit von 109ms aufgenommen und einer Bildrate von 5,8 fps. Die Bilder besitzen eine Größe von 2560 x 1920 Pixel bei einer Pixelauflösung von 24,4 $\mu$m/Pixel (Bildfeld: 46,83 x 62,44 mm).

Abstand Kamera - Küvette:      2000mm
Abstand Küvette - Punktematrix:      800mm

Daten werden in Excel importiert und ein Histogramm erstellt mit einer Klassenweite von 5 Pixeln.
Der Wiederholungsfehler der Messmethode beträgt $\pm$ 2 Pixel.

**Patentansprüche**

1. Verfahren zur Herstellung eines optischen Formkörpers (2), insbesondere eines Linsenelements (2), umfassend:

   - Erzeugen eines Vorformlings (4) in einem Formwerkzeug durch Spritzgießen eines ersten transparenten thermoplastischen Kunststoffs, und zwar eines Polycarbonats, und
   - Erzeugen von mindestens einer Deckschicht (6.1, 6.2) auf dem Vorformling (4) durch Spritzgießen eines zweiten transparenten thermoplastischen Kunststoffs, und zwar eines Polycarbonats,
   **dadurch gekennzeichnet, dass**
   - die Temperatur des Formwerkzeugs zum Erzeugen des Vorformlings (4) um 30% bis 60%, bezogen auf die Temperatur in °C, niedriger als die Temperatur des Formwerkzeugs zum Erzeugen der mindestens einen Deckschicht (6.1, 6.2) ist,

   wobei die Temperatur des Formwerkzeugs zum Erzeugen des Vorformlings (4) zwischen 60°C und 80°C liegt und die Temperatur des Formwerkzeugs zum Erzeugen der mindestens einen Deckschicht (6.1, 6.2) zwischen 90°C und 130°C liegt und wobei
   in dem Formwerkzeug während der Erzeugung des Vorformlings (4) ein Druck zwischen 250 und 500 bar erzeugt wird.

2. Verfahren nach Anspruch 1, **dadurch gekennzeichnet, dass** auf dem Vorformling (4) eine obere Deckschicht (6.1) und eine untere Deckschicht (6.2) durch simultanes Spritzgießen der Deckschichten (6.1, 6.2) aufgebracht werden.

**3.** Verfahren nach Anspruch 1 oder 2, **dadurch gekennzeichnet, dass**

- der erste Kunststoff aus dem gleichen Kunststoffmaterial wie der zweite Kunststoff gebildet ist oder
- der erste Kunststoff aus einem anderen Kunststoffmaterial als der zweite Kunststoff gebildet ist.

**4.** Verfahren nach einem der vorherigen Ansprüche, **dadurch gekennzeichnet, dass** das Schichtdickenverhältnis zwischen dem Vorformling (4) und den Deckschichten (6.1, 6.2) zwischen 60:40 bis 70:30 liegt.

**5.** Verfahren nach einem der Ansprüche 2 bis 4, **dadurch gekennzeichnet, dass** die Schichtdicke der oberen Deckschicht (6.1) im Wesentlichen der Schichtdicke der unteren Deckschicht (6.2) entspricht.

**6.** Verfahren nach einem der vorherigen Ansprüche, **dadurch gekennzeichnet, dass** ein optischer Formkörper (2) mit einer Dicke von mindestens 10 mm hergestellt wird.

**7.** Verfahren nach einem der vorherigen Ansprüche, **dadurch gekennzeichnet, dass** nach dem Einspritzvorgang zur Erzeugung der mindestens einen Deckschicht (6.1, 6.2) die Temperatur des Formwerkzeugs reduziert wird.


**Claims**

**1.** Method for producing an optical moulded body (2), in particular a lens element (2), comprising:

- producing a pre-moulding (4) in a moulding tool by injection moulding of a first transparent thermoplastic plastic, and specifically of a polycarbonate, and
- producing at least one covering layer (6.1, 6.2) on the pre-moulding (4) by injection moulding of a second transparent thermoplastic plastic, and specifically of a polycarbonate,
**characterised in that**
- the temperature of the moulding tool for producing the pre-moulding (4) is from 30% to 60%, based on the temperature in °C, lower than the temperature of the moulding tool for producing the at least one covering layer (6.1, 6.2),

where the temperature of the moulding tool for producing the pre-moulding (4) is from 60°C to 80°C, and the temperature of the moulding tool for producing the at least one covering layer (6.1, 6.2) is from 90°C to 130°C, and where a pressure of from 250 bar to 500 bar is generated in the moulding tool during the production of the pre-moulding (4).

**2.** Method according to Claim 1, **characterised in that** an upper covering layer (6.1) and a lower covering layer (6.2) are applied to the pre-moulding (4) by simultaneous injection moulding of the covering layers (6.1, 6.2).

**3.** Method according to Claim 1 or 2, **characterised in that**

- the first plastics material is formed of the same plastics material as the second plastics material, or
- the first plastics material is formed of a different plastics material than the second plastics material.

**4.** Method according to any one of the preceding claims, **characterised in that** the layer thickness ratio between the pre-moulding (4) and the covering layers (6.1, 6.2) is from 60:40 to 70:30.

**5.** Method according to any one of Claims 2 to 4, **characterised in that** the layer thickness of the upper covering layer (6.1) corresponds substantially to the layer thickness of the lower covering layer (6.2).

**6.** Method according to any one of the preceding claims, **characterised in that** an optical moulded body (2) having a thickness of at least 10 mm is produced.

**7.** Method according to any one of the preceding claims, **characterised in that**, after the injection operation for producing the at least one covering layer (6.1, 6.2), the temperature of the moulding tool is reduced.


**Revendications**

**1.** Procédé de fabrication d'un corps moulé optique (2), notamment d'un élément de lentille (2), comprenant :

- la formation d'une ébauche (4) dans un outil de moulage par moulage par injection d'un premier plastique thermoplastique transparente, à savoir d'un polycarbonate, et
- la formation d'au moins une couche de revêtement (6.1, 6.2) sur l'ébauche (4) par moulage par injection d'un deuxième plastique thermoplastique transparente, à savoir d'un polycarbonate,
**caractérisé en ce que**

- la température de l'outil de moulage pour la formation de l'ébauche (4) est inférieure de 30 % à 60 % à la température en °C de l'outil de moulage pour la formation de ladite au moins une couche de revêtement (6.1, 6.2),

la température de l'outil de moulage pour la formation de l'ébauche (4) étant comprise entre 60 °C et 80 °C, et la température de l'outil de moulage pour la formation de ladite au moins une couche de revêtement (6.1, 6.2) étant comprise entre 90 °C et 130 °C, et

une pression comprise entre 250 et 500 bar étant générée dans l'outil de moulage pendant la formation de l'ébauche (4).

2. Procédé selon la revendication 1, **caractérisé en ce qu'**une couche de revêtement supérieure (6.1) et une couche de revêtement inférieure (6.2) sont appliquées sur l'ébauche (4) par moulage par injection simultané des couches de revêtement (6.1, 6.2).

3. Procédé selon la revendication 1 ou 2, **caractérisé en ce que**

- le premier plastique est formé par la même matière plastique que le deuxième plastique ou
- le premier plastique est formé par une autre matière plastique que le deuxième plastique.

4. Procédé selon l'une quelconque des revendications précédentes, **caractérisé en ce que** le rapport entre les épaisseurs de couche de l'ébauche (4) et des couches de revêtement (6.1, 6.2) est compris entre 60:40 et 70:30.

5. Procédé selon l'une quelconque des revendications 2 à 4, **caractérisé en ce que** l'épaisseur de couche de la couche de revêtement supérieure (6.1) correspond essentiellement à l'épaisseur de couche de la couche de revêtement inférieure (6.2).

6. Procédé selon l'une quelconque des revendications précédentes, **caractérisé en ce qu'**un corps moulé optique (2) ayant une épaisseur d'au moins 10 mm est fabriqué.

7. Procédé selon l'une quelconque des revendications précédentes, **caractérisé en ce que** la température de outil de moulage est réduite après le processus d'injection pour la formation de ladite au moins une couche de revêtement (6.1, 6.2).

Fig. 1

Fig. 2

Einfallendes Licht
Intensität $(\Phi_\lambda)_0\, n_1$

Absorbiertes Licht
Intensität $(\Phi_\lambda)_a$

*Einfallswinkel* $\varepsilon_1$

Ausfallendes Licht
Intensität $(\Phi_\lambda)_t$

*Reflexionswinkel* $\varepsilon'$

$\varepsilon_2$

Reflektiertes Licht
Intensität $(\Phi_\lambda)_{r1}$
$(\Phi_\lambda)_{r2}$

*Probekörper*
$n_2$

$\varepsilon_3$

$n_1$

$(\Phi_\lambda)_0$

$(\Phi_\lambda)_1$

$(\Phi_\lambda)_{r1}$

$\tau_i(\lambda)$

$(\Phi_\lambda)_a$

$(\Phi_\lambda)_2$

$(\Phi_\lambda)_t$

$(\Phi_\lambda)_{r2}$

$\Phi$

Z

Fig. 3

Mehrschichtenspritzgießen

Fig. 4

Single Layer    Double Layer    Triple Layer    Zwiebel-Onion

Fig. 5

Fig. 6

Kühlzeitoptimum

Kühlzeit [s]

t1

Kühlzeit
Nachspritzling

Kühlzeit
Vorspritzling

Drehteller- oder Index-
Plattenwerkzeug

Vor- und Nachspritzlingdieselbe Kühlzeit

| | 1 |
|---|---|
| | 2 |

100% Vorspritzling
0% Nachspritzling

x1

0% Vorspritzling
100% Nachspritzling

Wanddickenverhältnis 1. Schicht / 2. Schicht

# Fig. 7

Kühlzeitoptimum

Kühlzeit [s]

t2

Kühlzeit
Nachspritzling

Kühlzeit
Vorspritzling

Drehteller- oder Index-
Plattenwerkzeug

Vor- und Nachspritzlingdieselbe Kühlzeit

| 2 |
|---|
| 1 |
| 2 |

100% Vorspritzling
0% Nachspritzling

x1

0% Vorspritzling
100% Nachspritzling

Wanddickenverhältnis 1. Schicht / 2. Schicht

# Fig. 8

Fig. 9a

Fig. 9b

Fig. 10

Fig. 12

| Einschichtlinse | Zweischichtenlinse | Dreischichtenlinse |
|---|---|---|
| | | |
| Nachdruck<br><br>Werkzeugtemperatur<br><br>Restkühlzeit | Nachdruck Vorspritzling<br><br>Nachdruck Nachspritzling<br><br>Werkzeugtemperatur<br><br>Restkühlzeit | Nachdruck Vorspritzling<br><br>Nachdruck Nachspritzling<br><br>Werkzeugtemperatur Vorspritzling<br><br>Werkzeugtemperatur Nachspritzling<br><br>Restkühlzeit Nachspritzling |

Fig. 11

EP 2 643 135 B1

VS: Vorspritzling
NS: Nachspritzling

Fig. 13

*Verdoppelung der Kühlzeit, da
zwei Verarbeitungsschritte erforderlich
im Vergleich zum Einschichtbauteil

Fig. 14

Fig. 15

Fig. 16

Prüfteil          Leuchtkasten
                  mit Muster

Fig. 17

Fig. 18

Kreis: Lage des Nullpunkte
Farbige Fläche: verschobener/ verzerrter Punkt durch das Bauelement aufgenommen

Fig. 19

| Prozessparameter-Triple-Layer | | | | | |
|---|---|---|---|---|---|
| Reihe | Twz VS | Zykl NS | Twz NS | pND VS | pND NS |
| V10 | 120 | 420 | 120 | 350 | 1000 |

99,3% aller Punkte erkannt

Absolute Häufigkeit

Pixelverschiebungen in Klassen

Fig. 20

| Prozessparameter-Single-Layer | | | |
|---|---|---|---|
| Reihe | tZykl | Twkzg | pNd |
| V8 | 400 | 115 | 1300 |

Fig. 21

| Prozessparameter-Triple-Layer | | | | | |
|---|---|---|---|---|---|
| Reihe | Twz VS | tZykl NS | Twz NS | pND VS | pND NS |
| V9 | 70 | 420 | 120 | 350 | 1000 |

Fig. 22

| Prozessparameter - Single - Layer | | | |
|---|---|---|---|
| Reihe | tzykl | Twkz g | pNd |
| V9 | 100 | 115 | 900 |

Fig. 23

EP 2 643 135 B1

## Prozessparameter - Triple - Layer

| Reihe | Twz VS | tzykl NS | Twz NS | pNd VS | pNd NS |
|-------|--------|----------|--------|--------|--------|
| V4 | 70 | 130 | 120 | 800 | 800 |

100% aller Punkte erkannt*

Anguss →

TL-V4 - 5h bei 125°C getempert

100% aller Punkte erkannt*

Anguss →

□ getempert
O ungetempert

# Fig. 24

Fig. 25

EP 2 643 135 B1

Linker Kreis:      Lage des Nullpunktes
Rechter Kreis:     verschobener/ verzerrter Punkt
                   durch das Bauelement aufgenommen
Zahl:              Nummer der Region
Kursive Zahl:      horizontale Verschiebung
Schwarzer Punkt:   Mittelpunkt der Fläche

Fig. 26

Fig. 27

Kamera  Optik  Immersionsöl  Prüfteil  Leuchtkasten mit Muster

Küvette

Dichteunterschiede/
Doppelbrechung im
Spritzgußteil

Fig. 28

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008034153 A1
- DE 69725535 T2
- DD 298620 A5
- JP 2001191365 A
- US 20040188886 A1
- DE 69411728 T2
- DE 20022726 U1
- US 20090283926 A1
- US 7615176 B
- EP 0517044 A1
- DE 1031512 B
- US 6228973 B
- WO 2008037364 A1
- EP 1582549 A1
- WO 2002026862 A1
- WO 2005113639 A1
- US 4185009 B
- DE 2500092 A1
- DE 4240313 A1
- DE 19943642 A1
- US 5367044 B
- EP 1506249 A1
- EP 1308084 A1
- DE 102007011069 A1
- DE 10311063 A1
- EP 1559743 A1
- EP 1865027 A1
- DE 10022037 A1
- DE 10006208 A1
- IT RM20100225 A
- IT RM2010A000227 A
- IT RM2010A000228

**In der Beschreibung aufgeführte Nicht-Patentliteratur**

- Chemistry and Physics of Polycarbonates. **H. SCHNELL.** Polymer Reviews. Interscience Publishers, 1964, vol. 9, 33
- Condensation Polymers by Interfacial and Solution Methods. **PAUL W. MORGAN.** Polymer Reviews. Interscience Publishers, 1965, vol. 10, 325
- Polycarbonate. **DRES. U. GRIGO ; K. KIRCHER ; P. R- MÜLLER.** Kunststoff-Handbuch, Band 3/1, Polycarbonate, Polyacetale, Polyester, Celluloseester. Carl Hanser Verlag, 1992, 118-145
- Encyclopedia of Polymer Science. 1969, vol. 10
- **H. SCHNELL.** Chemistry and Physics of Polycarbonates, Polymer Reviews. John Wiley and Sons, Inc, 1964, vol. 9